Europäisches Patentamt

**European Patent Office**

**Office européen des brevets**

(11) Veröffentlichungsnummer: **0 143 076**
**B1**

(12) **EUROPÄISCHE PATENTSCHRIFT**

(45) Veröffentlichungstag der Patentschrift:
**18.01.89**

(21) Anmeldenummer: **84810498.0**

(22) Anmeldetag: **09.10.84**

(51) Int. Cl.⁴: **B 60 R  13/10**

(54) **Universal-Kontrollschilder-Halter.**

(30) Priorität: **08.11.83  CH 5993/83**

(43) Veröffentlichungstag der Anmeldung:
**29.05.85 Patentblatt 85/22**

(45) Bekanntmachung des Hinweises auf die Patenterteilung:
**18.01.89 Patentblatt 89/3**

(84) Benannte Vertragsstaaten:
**AT DE**

(56) Entgegenhaltungen:
**CH-A- 552 488**
**DE-A- 2 913 010**
**DE-A- 3 036 492**
**US-A- 3 304 642**
**US-A- 3 805 231**
**US-A- 3 915 491**

(73) Patentinhaber: **Bains, Rasphal,**
**Kümmertshauserstrasse 3, CH-8586 Erlen (CH)**

(72) Erfinder: **Bains, Rasphal, Kümmertshauserstrasse 3,**
**CH-8586 Erlen (CH)**

ACTORUM AG

## Beschreibung

Die Anmeldung bezieht sich auf einen Universal-Kontrollschild-Halter bestehend aus einem mit Befestigungselementen versehenen Halterungsteil, an dem an der unteren Seite ein Wechselrahmen für die Aufnahme eines Schildes schwenkbar gelagert ist. Ein derartiger Halter ist aus der Patentschrift US-A-3 204 642 bekannt.

Die Aufgabe der Erfindung besteht darin, die Verbindungselemente, die den Wechselrahmen in seiner Gebrauchslage halten, möglichst einfach und so zu gestalten, dass sie durch Rosten nicht funktionsunfähig werden.

Diese Aufgabe wird dadurch gelöst, dass an der oberen Seite des Wechselrahmens und der Halterung eine Federschloss-Sicherungszapfen-Verbindung vorgesehen ist und dass der Sicherungszapfen in der Gebrauchslage des Halters in das Federschloss eingeschnappt ist.

Vorteilhafte Weiterbildungen der Erfindung sind in den abhängigen Ansprüchen 2 und 3 enthalten.

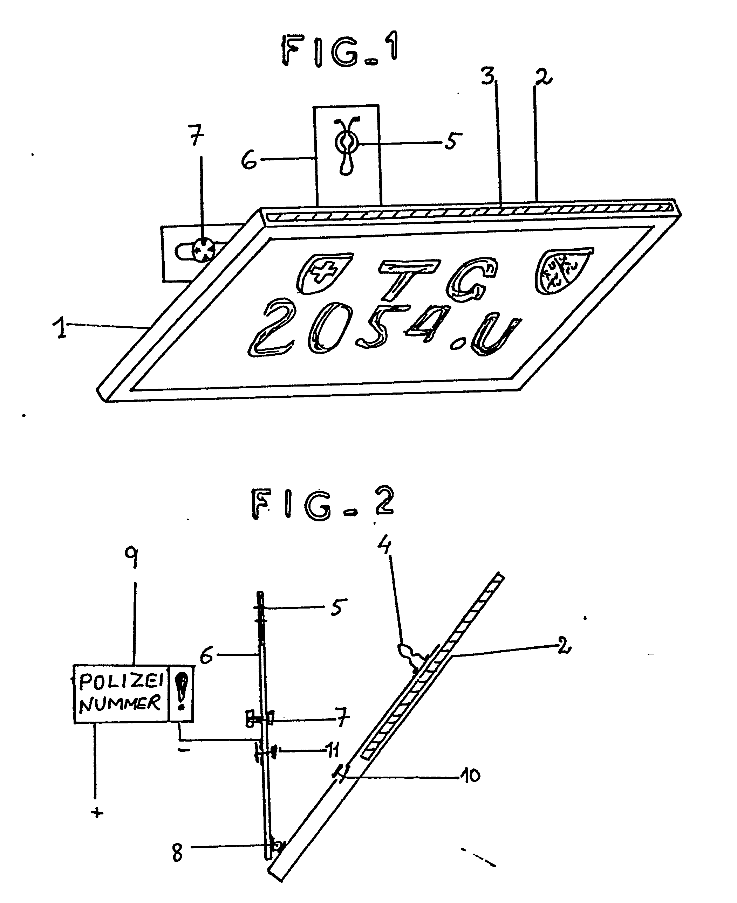

In den Figuren 1, 2 bzw. 3, 4 sind Ausführungsbeispiele der Erfindung dargestellt.

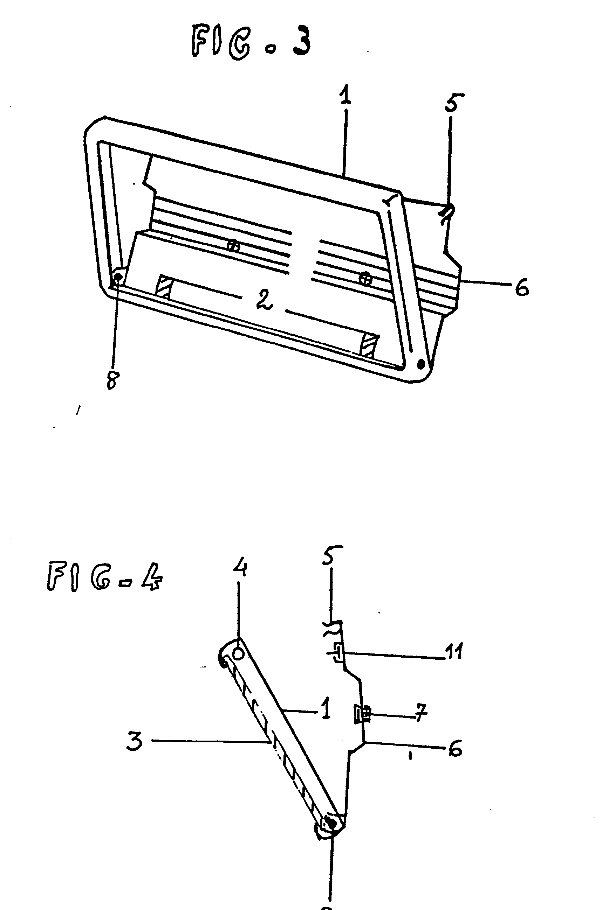

Das Halterungsteil 6 wird mit Schrauben 7 am Kraftfahrzeug befestigt. Der Wechselrahmen 2 für die Aufnahme eines Nummernschildes 3 ist an der unteren Seite des Halterungsteiles 6 mit einem Scharnier 8 angelenkt. An der oberen Seite des Halterungsteils 6 und des Wechselrahmens 1 befindet sich eine Federschloss-Sicherungszapfen-Verbindung 4, 5, mit der der Wechselrahmen an das Halterungsteil eingeschnappt wird. Mit Hilfe des Schalters 10, 11 und der elektrischen Leitung 9 wird ein Warnsignal erzeugt werden, wenn sich die Schnappverbindung 4, 5 löst. Das Kraftfahrzeugschild wird in der Ausführung gemäss Figur 2 in den als Tasche ausgebildeten Wechselrahmen hineingeschoben, während das Schild in dem Wechselrahmen gemäss Figur 3 hineingelegt wird und erst durch die Anlage an das Halterungsteil 6 nach dem Einschnappvorgang sicher gehalten wird.

Aufbau
1. Kontrollschildrahmen
2. Schlitz
3. Nummerschild
4. Sicherungszapfen
5. Federschloss
6. Montage Kreuz
7. Befestigungsschraube
8. Scharnier
9. Warnsignal
10. Feder
11. Schalter
12. Stromkabel

## Patentansprüche

1. Universal-Kontrollschild-Halter bestehend aus einem an der Karosserie befestigten Halterungsteil (6), an dem an der unteren Seite ein Wechselrahmen (2) für die Aufnahme eines Kraftfahrzeugschildes (3) schwenkbar gelagert ist, dadurch gekennzeichnet, dass an der oberen Seite des Wechselrahmens und der Halterung eine Federschloss-Sicherungszapfen-Verbindung (4, 5) vorgesehen ist und dass der Sicherungszapfen in der Gebrauchslage des Halters in das Federschloss eingeschnappt ist.

2. Universal-Kontrollschild-Halter nach Anspruch 1, dadurch gekennzeichnet, dass der Wechselrahmen (2) einen Schwenkbereich von max. 45° aufweist.

3. Universal-Kontrollschild-Halter nach Anspruch 1 oder 2, dadurch gekennzeichnet, dass im Kraftfahrzeug bei gelöster Federschloss-Sicherungszapfenverbindung ein Warnsignal erzeugt wird.

## Claims

1. Universal holder for a licence plate comprising a support (6) to be mounted on the car body, a frame (2) for exchangably holding a registration number plate (3) being swivelable connected to the lower side of the support characterized in that the upper side of the frame and the support are provided with a spring-lock and a lock pin (4, 5), which snaps into locking position when the holder is in use.

2. Universal holder for a licence plate according to claim 1 characterized in that the frame (2) is swivelable range not exceeding 45°.

3. Universal holder for a licence plate according to claim 1 or 2 characterized in that a warning signal is produced inside the motorcar when the lock between the safety pin and the spring lock is broken.

## Revendications

1. Support universel de plaques de contrôle, constitué par une pièce de maintien (6), fixée à la carrosserie et sur laquelle est monté de manière pivotable, à la partie inférieure un cadre interchangeable (2) pour la réception d'une plaque d'immatriculation de véhicule automobile, caractérisé en ce qu'à la partie supérieure du cadre interchangeable et de la pièce de maintien est prévue une liaison – verrou élastique – broche de sécurité (4–5), et en ce que la broche de sécurité est, en position de service du support, encliquetée dans le verrou élastique.

2. Support universel, suivant la revendication 1, caractérisé en ce que le cadre interchangeable (2) présente une zone de pivotement d'un angle maximum de 45°.

3. Support universel, suivant la revendication 1 ou 2, caractérisé en ce qu'un signal d'alarme est engendré dans le véhicule en cas d'interruption de la liaison – verrou élastique – broche de sécurité.

# FIG. 1

# FIG. 2

POLIZEI
NUMMER

# FIG . 3

# FIG - 4